# EUROPEAN PATENT APPLICATION

(11) **EP 4 534 256 A1**
(43) Date of publication of application: **09.04.2025**
(21) Application number: 24204819.7
(22) Date of filing: 04.10.2024
(51) Int. Cl.: B25J 9/16

(54) **TECHNIQUES FOR AUTOMATED PROGRAMMING OF ROBOT TASKS USING LANGUAGE MODELS**

(30) Priority: 04.10.2023 US 202363587887 P; 17.04.2024 US 202418638551
(71) Applicant: Autodesk, Inc., San Francisco, CA 94105 (US)
(72) Inventor: COTE, Nicholas, San Francisco, 94105 (US); MACALUSO, Annabella, San Francisco, 94105 (US)
(74) Representative: Morrall, Jonathan Ian McLachlan

(57) **Abstract**

One embodiment of a method for generating program code to control a robot includes receiving user input specifying a task to be performed by the robot, processing the user input via a first machine learning model to generate a plurality of subtasks for performing the task, and for each subtask included in the plurality of subtasks, processing the subtask via a second machine learning model to generate program code for controlling the robot to perform the subtask.

## Description

### CROSS-REFERNCE TO RELATED APPLICATIONS

This application claims priority benefit of the United States Provisional Patent Application titled, "AUTOMATED PROGRAMMING FOR ROBOTIC ASSEMBLY USING CHATGPT," filed on October 4, 2023, and having Serial No. 63/587,887. The subject matter of this related application is hereby incorporated herein by reference.

### BACKGROUND

### Field of the Various Embodiments

Embodiments of the present invention relate generally to robot control, artificial intelligence (Al), and machine learning and, more specifically, to techniques for automated programming of robot tasks using language models.

### Description of the Related Art

Robots are being increasingly used to perform tasks automatically in various environments. One approach for controlling a robot to perform a given task is to program the robot to perform the same actions repeatedly. For example, in electronics assembly, robots can be programmed to perform tasks, such as soldering circuit boards or placing microchips, with high precision.

One conventional approach for programming a robot to perform a given task uses behavior scripts that include specific command sequences. The specific command sequences direct the robot to perform movements and actions required to execute the given task. As a general matter, behavior scripts are developed by programmers having a detailed understanding of the mechanics and capabilities of each robot, and the precision and specificity of the command sequences in a behavior script is crucial to correctly controlling a robot to perform a given task.

One drawback of conventional robotic systems is that such systems are not readily adaptable to modifications in the tasks that robots are controlled to perform. For example, when an assembly process is modified to assemble different parts or to assemble parts in a different order, a conventional robot must be reprogrammed with new behavior scripts that control the robot to perform the modified assembly process. Oftentimes, the reprogramming is very time consuming and requires considerable engineering expertise, including understanding the robot kinematics, the requirements of the task to be performed by the robot, and the control programming language.

As the foregoing indicates, what is needed in the art are more effective techniques for controlling robots to perform tasks.

### SUMMARY

One embodiment of the present disclosure sets forth a computer-implemented method for generating program code to control a robot. The method includes receiving user input specifying a task to be performed by the robot. The method further includes processing the user input via a first machine learning model to generate a plurality of subtasks for performing the task. In addition, the method includes, for each subtask included in the plurality of subtasks, processing the subtask via a second machine learning model to generate program code for controlling the robot to perform the subtask

Other embodiments of the present disclosure include, without limitation, one or more computer-readable media including instructions for performing one or more aspects of the disclosed techniques as well as one or more computing systems for performing one or more aspects of the disclosed techniques.

At least one technical advantage of the disclosed techniques relative to the prior art is that, unlike conventional robotic systems that are unable to perform new tasks without extensive manual reprogramming, the disclosed techniques automatically generate executable scripts for controlling robots to perform new tasks. With the disclosed techniques, time-intensive manual reprogramming and expert knowledge are not required to adapt a robot to various scenarios that require the robot to perform different tasks. These technical advantages represent one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, can be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIG. 1 is a block diagram illustrating a robot control system configured to implement one or more aspects of the present embodiments;
FIG. 2 is a more detailed illustration of the computing device of FIG. 1, according to various embodiments;
FIG. 3 is a more detailed illustration of the task decomposition module in the robot control application of FIG. 1, according to various embodiments;
FIG. 4 is a more detailed illustration of the script generation module in the robot control application of FIG. 1, according to various embodiments;
FIG. 5 is a flow diagram of method steps for controlling a robot, according to various embodiments; and
FIG. 6 is a flow diagram of method steps for generating subtask scripts, according to various embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

### System Overview

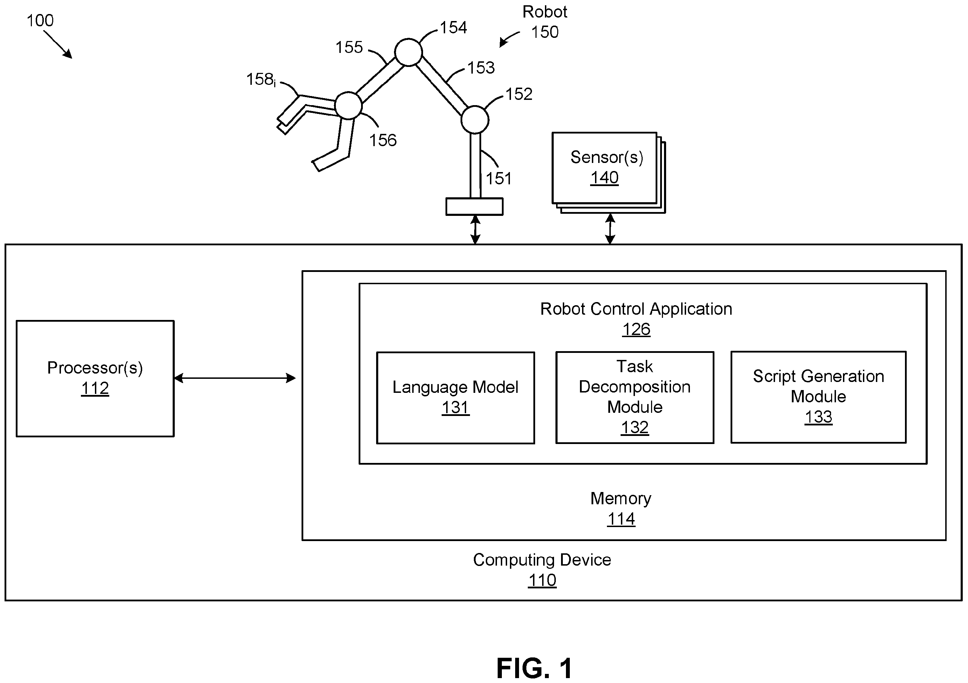

FIG. 1 illustrates a block diagram of a computer-based system 100 configured to implement one or more aspects of at least one embodiment. As shown, system 100 includes a computing device 110, a robot 150, and sensor(s) 140.

A robot control application 126 executes on one or more processors 112 of computing device 110 and is stored in a system memory 114 of computing device 110. Processor(s) 112 receive user input from input devices, such as a keyboard or a mouse. Processor(s) 112 can include one or more primary processors of computing device 110, controlling and coordinating operations of other system components. In operation, processor(s) 112 can issue commands that control the operation of one or more graphics processing units (GPUs) (not shown) and/or other parallel processing circuitry (e.g., parallel processing units, deep learning accelerators, etc.) that incorporates circuitry optimized for graphics and video processing, including, for example, video output circuitry. The GPU(s) can deliver pixels to a display device that can be any conventional cathode ray tube, liquid crystal display, light-emitting diode display, and/or the like.

System memory 114 of computing device 110 stores content, such as software applications and data, for use by processor(s) 112 and the GPU(s) and/or other processing units. System memory 114 can be any type of memory capable of storing data and software applications, such as a random-access memory (RAM), a read-only memory (ROM), an erasable programmable read-only memory (EPROM or Flash ROM), or any suitable combination of the foregoing. In some embodiments, a storage (not shown) can supplement or replace system memory 114. The storage can include any number and type of external memories that are accessible to processor(s) 112 and/or the GPU(s). For example, and without limitation, the storage can include a Secure Digital Card, an external Flash memory, a portable compact disc read-only memory (CD-ROM), an optical storage device, a magnetic storage device, and/or any suitable combination of the foregoing.

Computing device 110 shown herein is for illustrative purposes only, and variations and modifications are possible without departing from the scope of the present disclosure. For example, the number of processors 112, the number of GPUs and/or other processing unit types, the number of system memories 114, and/or the number of applications included in system memory 114 can be modified as desired. Further, the connection topology between the various units in FIG. 1 can be modified as desired. In some embodiments, any combination of processor(s) 112, system memory 114, and/or GPU(s) can be included in and/or replaced with any type of virtual computing system, distributed computing system, and/or cloud computing environment, such as a public, private, or a hybrid cloud system.

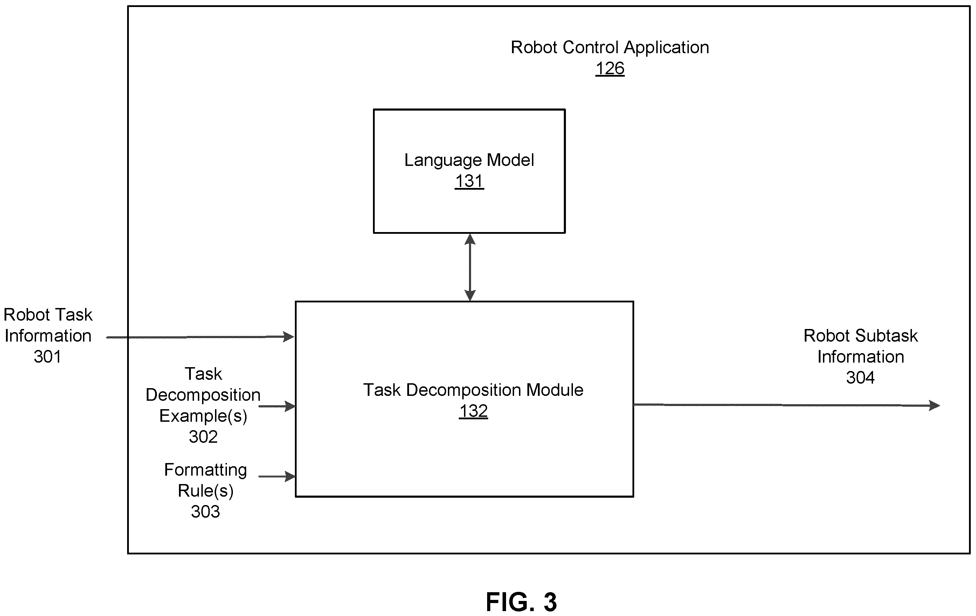

In some embodiments, robot control application 126 includes a language model 131, a task decomposition module 132, and a script generation module 133. In operation, robot control application can control a robot 150 to perform one or more tasks given sensor data captured by one or more sensors 140 (e.g., force sensors, cameras, etc.). Techniques that robot control application 126 can employ to control robot 150 are discussed in greater detail below in conjunction with FIGs. 3-6. Although shown as included in robot control application 126, in some embodiments, language model 131 can be external to robot control application 126 (e.g., language model 131 can execute in a cloud computing environment) and be accessed in any technically feasible manner, such as via an application programming interface (API).

As shown, robot 150 includes multiple links 151, 153, and 155 that are rigid members, as well as joints 152, 154, and 156, which are movable components that can be actuated to cause relative motion between adjacent links. In addition, robot 150 includes multiple fingers 158ᵢ (referred to herein collectively as fingers 158 and individually as a finger 158) that can be controlled to grip an object. For example, in some embodiments, robot 150 can include a locked wrist and multiple fingers. Although an example robot 150 is shown for illustrative purposes, in some embodiments, techniques disclosed herein can be applied to control any technically feasible robot (e.g., a robot with multiple arms, a robot that includes multiple robots cooperating to perform task(s), etc.).

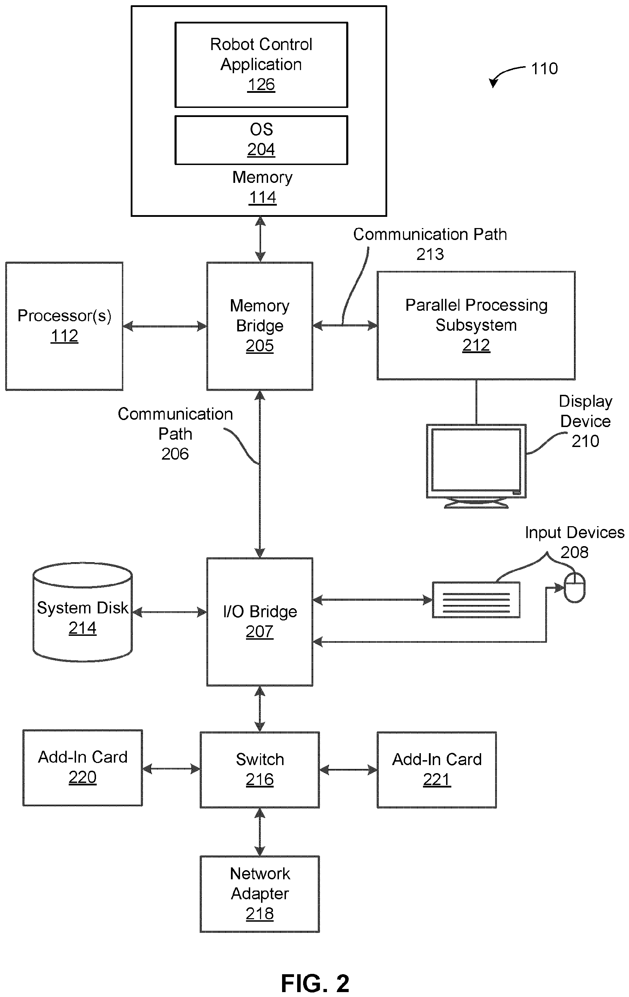

FIG. 2 is a more detailed illustration of computing device 110 of FIG. 1, according to various embodiments. Computing device 110 can include any type of computing system, including, without limitation, a server machine, a server platform, a desktop machine, a laptop machine, a hand-held/mobile device, a digital kiosk, an in-vehicle infotainment system, and/or a wearable device. In some embodiments, computing device 110 is a server machine operating in a data center or a cloud computing environment that provides scalable computing resources as a service over a network.

In some embodiments, computing device 110 includes, without limitation, processor(s) 112 and memory(ies) 144 coupled to a parallel processing subsystem 212 via a memory bridge 205 and a communication path 213. Memory bridge 205 is further coupled to an I/O (input/output) bridge 207 via a communication path 206, and I/O bridge 207 is, in turn, coupled to a switch 216.

In some embodiments, I/O bridge 207 is configured to receive user input information from optional input devices 208, such as a keyboard, mouse, touch screen, sensor data analysis (e.g., evaluating gestures, speech, or other information about one or more uses in a field of view or sensory field of one or more sensors), and/or the like, and forward the input information to processor(s) 112 for processing. In some embodiments, computing device 110 may be a server machine in a cloud computing environment. In such embodiments, computing device 110 may not include input devices 208, but can receive equivalent input information by receiving commands (e.g., responsive to one or more inputs from a remote computing device) in the form of messages transmitted over a network and received via the network adapter 218. In some embodiments, switch 216 is configured to provide connections between I/O bridge 207 and other components of the machine learning server 110, such as a network adapter 218 and various add in cards 220 and 221.

In some embodiments, I/O bridge 207 is coupled to a system disk 214 that may be configured to store content and applications and data for use by processor(s) 112 and parallel processing subsystem 212. In one embodiment, system disk 214 provides non-volatile storage for applications and data and may include fixed or removable hard disk drives, flash memory devices, and CD-ROM (compact disc read-only-memory), DVD-ROM (digital versatile disc-ROM), Blu-ray, HD-DVD (high-definition DVD), or other magnetic, optical, or solid state storage devices. In some embodiments, other components, such as universal serial bus or other port connections, compact disc drives, digital versatile disc drives, film recording devices, and the like, may be connected to I/O bridge 207 as well.

In some embodiments, memory bridge 205 may be a Northbridge chip, and I/O bridge 207 may be a Southbridge chip. In addition, communication paths 206 and 213, as well as other communication paths within computing device 110, may be implemented using any technically suitable protocols, including, without limitation, AGP (Accelerated Graphics Port), HyperTransport, or any other bus or point to point communication protocol known in the art.

In some embodiments, parallel processing subsystem 212 includes a graphics subsystem that delivers pixels to an optional display device 210 that may be any conventional cathode ray tube, liquid crystal display, light-emitting diode display, and/or the like. In such embodiments, parallel processing subsystem 212 may incorporate circuitry optimized for graphics and video processing, including, for example, video output circuitry. Such circuitry may be incorporated across one or more parallel processing units (PPUs), also referred to herein as parallel processors, included within parallel processing subsystem 212.

In some embodiments, parallel processing subsystem 212 incorporates circuitry optimized (e.g., that undergoes optimization) for general purpose and/or compute processing. Again, such circuitry may be incorporated across one or more PPUs included within parallel processing subsystem 212 that are configured to perform such general purpose and/or compute operations. In yet other embodiments, the one or more PPUs included within parallel processing subsystem 212 may be configured to perform graphics processing, general purpose processing, and/or compute processing operations. System memory 114 includes at least one device driver configured to manage the processing operations of the one or more PPUs within parallel processing subsystem 212. In addition, system memory 114 stores robot control application 126 and an operating system 204 on which robot control application 126 runs. The operating system 204 can be, e.g., Linux^{®}, Microsoft Windows^{®}, or macOS^{®}. Although described herein primarily with respect to computing device 110, techniques disclosed herein can also be implemented, either entirely or in part, in other software and/or hardware, such as in parallel processing subsystem 212.

In some embodiments, parallel processing subsystem 212 may be integrated with one or more of the other elements of FIG. 2 to form a single system. For example, parallel processing subsystem 212 may be integrated with processor(s) 112 and other connection circuitry on a single chip to form a system on a chip (SoC).

In some embodiments, processor(s) 112 include the primary processor of computing device 110, controlling and coordinating operations of other system components. In some embodiments, processor(s) 112 issue commands that control the operation of PPUs. In some embodiments, communication path 213 is a PCI Express link, in which dedicated lanes are allocated to each PPU. Other communication paths may also be used. The PPU advantageously implements a highly parallel processing architecture, and the PPU may be provided with any amount of local parallel processing memory (PP memory).

It will be appreciated that the system shown herein is illustrative and that variations and modifications are possible. The connection topology, including the number and arrangement of bridges, the number of CPUs 202, and the number of parallel processing subsystems 212, may be modified as desired. For example, in some embodiments, system memory 114 could be connected to processor(s) 112 directly rather than through memory bridge 205, and other devices may communicate with system memory 114 via memory bridge 205 and processor(s) 112. In other embodiments, parallel processing subsystem 212 may be connected to I/O bridge 207 or directly to processor 142, rather than to memory bridge 205. In still other embodiments, I/O bridge 207 and memory bridge 205 may be integrated into a single chip instead of existing as one or more discrete devices. In certain embodiments, one or more components shown in FIG. 2 may not be present. For example, switch 216 could be eliminated, and network adapter 218 and add in cards 220, 221 would connect directly to I/O bridge 207. Lastly, in certain embodiments, one or more components shown in FIG. 2 may be implemented as virtualized resources in a virtual computing environment, such as a cloud computing environment. In particular, parallel processing subsystem 212 may be implemented as a virtualized parallel processing subsystem in some embodiments. For example, parallel processing subsystem 212 may be implemented as a virtual graphics processing unit(s) (vGPU(s)) that renders graphics on a virtual machine(s) (VM(s)) executing on a server machine(s) whose GPU(s) and other physical resources are shared across one or more VMs.

### Automated Programming of Robot tasks Using Language Models

FIG. 3 is a more detailed illustration of task decomposition module 132 in robot control application 126 of FIG. 1, according to various embodiments. As shown, task decomposition module 132 uses language model 131 to process robot task information 301, one or more task decomposition examples 302, and one or more formatting rules 303, and task decomposition module 132 generates robot subtask information 304.

Illustratively, robot control application 126 receives robot task information 301 as input. In some embodiments, robot task information 301 includes (1) the overall goal of a robot task to be performed, for example, a natural language description of the task such as "Assemble Axle" and/or the like; (2) the environment in which the robot operates; and (3) any constraints or parameters specific to the task, such as time limitations, precision requirements, safety considerations, and/or the like. In some embodiments, spatial relationships for common objects are extracted from a computer-aided design (CAD) software and stored in a file (e.g., a JavaScript Object Notation (JSON) file), which can also be included in robot task information 301.

Language model 131 is a trained machine learning model that, in operation, interprets robot task information 301 and translates robot task information 301 into robot subtask information 304 that script generation module 133 can use to generate scripts for performing subtasks. Any technically feasible machine learning model can be used in some embodiments. In some embodiments, language model 131 can be a large language model (LLM). In some embodiments, the scripts can include program code, such as calls to particular functions provided by an API for controlling a robot, that can be translated into low-level commands that prompt physical actions from the robot. In some other embodiments, the scripts can include low-level commands that prompt physical actions from a robot. Language model 131 is able to generate scripts for performing subtasks because language model 131 understands possible robot behaviors that align with the goals of robot task information 301, which can be gleaned from extensive training on diverse datasets. In some embodiments, task decomposition module 132 uses few shot prompting with one or more task decomposition example(s) 302 to constrain the output of language model 131.

Task decomposition example(s) 302 include template(s), prior examples of decomposing similar task(s), and/or the like. In some embodiments, task decomposition example(s) 302 include examples of how similar task(s) were broken down into subtasks in the past, which provides reference(s) for task decomposition module 132. Task decomposition module 132 uses task decomposition examples 302 to inform language model 131 on how to decompose a task into subtasks. Each subtask is itself a task, and each subtask can be assigned a behavior label that is a primitive corresponding to a common robot behavior, such as "Move," "Pick," "Place," "Insert," etc. In some embodiments, one or more of task decomposition examples 302 can be included in a few-shot prompt asking language model 131 to decompose a task into subtasks.

One or more formatting rules 303 define how the decomposed subtasks should be structured. Task decomposition module 132 uses formatting rule(s) 303 to inform language model 131 of the correct format for output of the language model 131. In some embodiments, if the robot operates based on a certain behavior scripting language, such as python, C++, and/or the like, formatting rule(s) 303 ensure that the decomposed tasks included in robot subtask information 304 are compatible with the syntax and semantics of the behavior scripting language. The output of task decomposition module 132 is robot subtask information 304, which includes a series of smaller, discrete robot actions that, when executed in sequence, accomplish the robot task included in robot task information 301. For example, the robot task "Assemble Axle" can be decomposed into the following subtasks: "Detect Axle", "Pick-Up Axle", "Move Axle", and "Insert Axle". In some embodiments, task decomposition module 132 continuously checks if robot subtask information 304 for all robot subtasks has been generated.

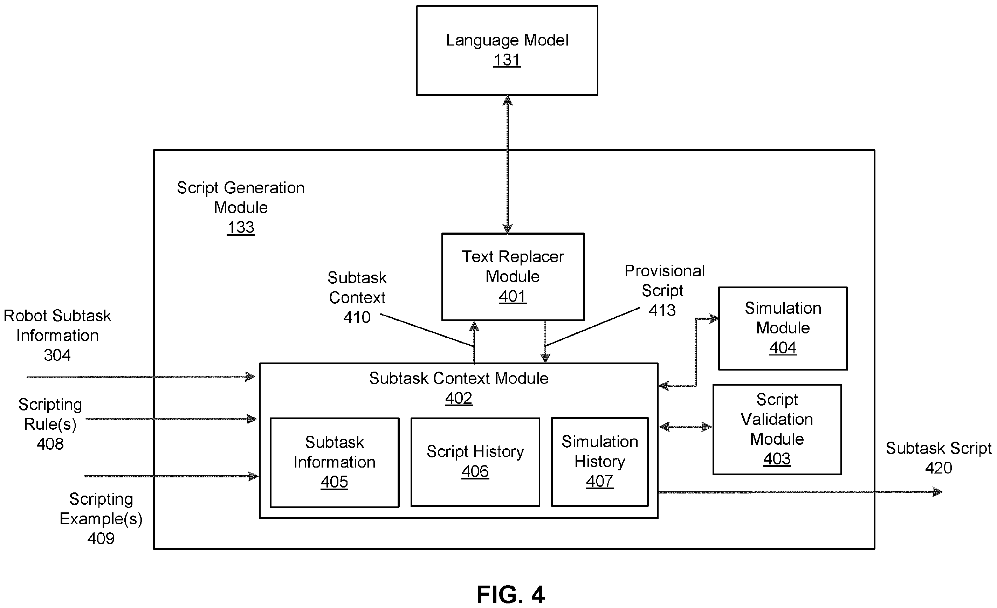

FIG. 4 is a more detailed illustration of script generation module 133 in robot control application 126 of FIG. 1, according to various embodiments. As shown, script generation module 133 includes a text replacer module 401, a subtask context module 402, a script validation module 403, and a simulation module 404. Although a single script generation module 133 is shown for illustrative purposes, in some embodiments, script generation module 133 can be implemented using multiple agents that execute in parallel to generate scripts for different subtasks specified in robot subtask information 304, and then simulating and debugging the scripts in sequence to ensure that a task can be performed successfully.

Script generation module 133 processes robot subtask information 304, one or more scripting rule(s) 408, and one or more scripting example(s) 409 using language model 131 in order to generate subtask script 420, which is a script including program code that can be executed to perform a subtask specified in robot subtask information 304. Although one language model 131 is shown for illustrative purposes, in some embodiments, the language model used by script generation module 133 can be different from the large language model used by task decomposition module 131. For example, in some embodiments, task decomposition module 131 and script generation module 133 can use different language models that are fine tuned for decomposing robot tasks into subtasks and for writing program code for robots, respectively, using appropriate training data.

Text replacer module 401 is configured to prevent sensitive information from being disclosed inadvertently as subtask context module 402 interacts with language model 131. In operation, text replacer module 401 replaces certain terms that can contain proprietary or confidential data with pre-determined public or private aliases. In some embodiments, the aliases are designed to be unique and non-reversible, which means that once a term is replaced, the original information cannot be deduced from the alias. In some embodiments, text replacer module 401 operates by referencing a dictionary of terms that require aliasing. When a script or data packet containing any of the terms is processed, text replacer module 401 scans the content and performs the replacements automatically.

Subtask context module 402 includes subtask information 405, script history 406, and simulation history 407. Illustratively, subtask context module 402 receives robot subtask information 304 that is generated by task composition module 132, one or more scripting rules 408, and one or more scripting examples 409, which are input into script generation module 133. Scripting rule(s) 408 provide the structure, syntax, and semantic framework for the subtask scripts 410 that the script generation module 133 generates using language model 131, which can be in various programming languages, such as Python, C++, and/or the like. For example, scripting rule(s) 408 for a Python-based script can include "reply only with python code.", "remember to import '***'", "put all code inside a main function", and/or the like. Scripting example(s) 409 includes, but is not limited to, previously tested and correct scripts for robot subtask(s). In some embodiments, scripting example(s) 409 includes scripting examples with varied levels of complexity to increase the diversity in scripting example(s) 409. Scripting example(s) 409 can be obtained in any technically feasible manner in some embodiments. For example, in some embodiments, the behavior label (e.g., "Pick up") assigned to a subtask can be used to look up, within a set of files or a database, scripting examples associated with the same behavior label.

Subtask context module 402 stores robot subtask information 304, scripting rule(s) 408, and scripting example(s) 409 as subtask information 405. In some embodiments, subtask information 405 indicates (1) one or more subtasks that a user-specified task is broken into, and (2) a behavior label assigned to each subtask. In some embodiments, subtask information 405 can also include reference documents for robot subtasks, such as technical documentation, operational guidelines, specific programming references that further assist in the script development for robot subtasks, and/or the like.

Subtask context module 402 sends subtask context 410, which includes the contents of subtask information 405, script history 406, and simulation history 407, to text replacer module 401. Given such inputs, text replacer module 401 replaces proprietary confidential terms therein, if any, with public aliases. The subtask context with text replaced is then sent to language model 131, which generates a subtask script that can include errors. Text replacer module 401 can also replace text in the subtask script generated by language model 131 to generate a provisional script 413, which text replacer module 401 sends to subtext context module 402 to be stored in script history 406. Provisional script 413 is a script generated by language model 131 that has been validated by script validation module 403 against syntax, formatting errors, run-time exceptions, and/or the like. The validation result is also stored in script history 406. Once provisional script 413 is validated, simulation module 404 simulates provisional script 413 in a virtual environment to check whether the robot subtask can be carried out successfully using the script. For example, the virtual environment can include a simulated workcell in which the script is executed, and control errors such as collisions or failure to achieve a desired final state can result in a failed simulation result. The "fail" or "success" simulation result is also stored in simulation history 407. Subtask context module 402 appends script history 406 and simulation history 407 to the subtask context 410 and re-sends the subtask context 410 to the language model 131 for script generation if the simulation result is a failure. Script generation module 133 continuously updates the provisional script (e.g., provisional script 413) until a provisional script is generated that runs without validation and simulation errors or the subtask scripts 410 for all subtasks are generated.

For example, in the case of a robotic assembly task, the initial chat context for input into language model 131 can be formulated as (R, L, S, P, B, E), where R is a role such as "You are a chat agent that divides a robot task into robotic subtasks," L are the formatting rules, S is the assembly sequence as a dictionary, P is a list of part names, B is a list of available behavior primitives, and E is a set of high quality examples for few-shot prompting. user can then provide a language description of the task, T, such as "Assemble the toy car." Script generation module 133 uses language model 131 to generate and debug scripts for subtasks and associated behavior labels (e.g., the subtask of "Pickthebaseplate" and the behavior label of "Pick", etc.). For a given subtask, the initial chat context for input into language model 131 can be formulated as (R, L, A, W, P, E), where R is a role such as or "You are a chat agent that generates code for robots," L are scripting rules, W is the assembly context as a dictionary, D is a reference documentation for a programming language API, and E is a scripting example associated with a behavior label. A generated script, S, and any syntax errors or runtime exceptions, X, can be appended to such a context during every iteration to improve upon prior versions: (R, L, A, W, D, E, S1, X₁, ..., Sₙ).

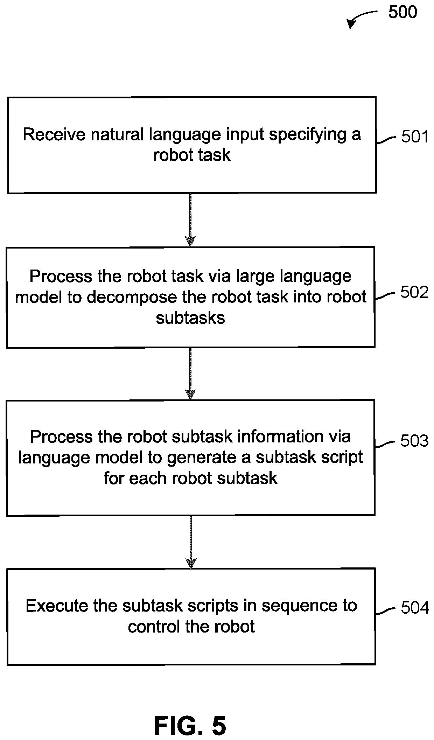

FIG. 5 is a flow diagram of method steps for controlling a robot, according to various embodiments. Although the method steps are described in conjunction with the systems of FIGs. 1-4, persons skilled in the art will understand that any system configured to perform the method steps in any order falls within the scope of the present embodiments.

As shown, a method 500 begins at step 501, where robot control application 126 receives natural language input specifying a robot task. A user can enter a robot task using one or more input devices 208, and the robot task is communicated to robot control application 126. In some embodiments, the input can include a textual description of a task, such as "Assemble Axle".

At step 502, task decomposition module 132 of robot control application 126 processes the robot task specified in the natural language input via language model 131 to decompose the robot task into robot subtasks. Task decomposition module 132 uses language model 131 to interpret the natural language description of the robot task and transform the natural language description into a structured set of robot subtasks, such as the robot subtasks in robot subtask information 304. Task decomposition module 132 uses task decomposition example(s) 302, which can include templates or historical data on how similar robot tasks have been broken down into subtasks, to guide language model 131 on how to break the robot task into subtasks. Additionally, task decomposition module 132 uses formatting rule(s) 303 to ensure the output from the language model 131 is in a suitable format for processing by script generation module 133. The output of task decomposition module 132 is a series of robot subtask information, which includes but is not limited to discrete, executable robot actions "Detect Axle," "Pick-Up Axle," "Move Axle," and "Insert Axle," that align with the overarching goal outlined in the robot task specified in the natural language input. In some embodiments, the output of task decomposition module 132 can also include behavior labels, such as "Detect," "Pick," "Move," and "Insert" that are assigned to each subtask and correspond to common robot behaviors.

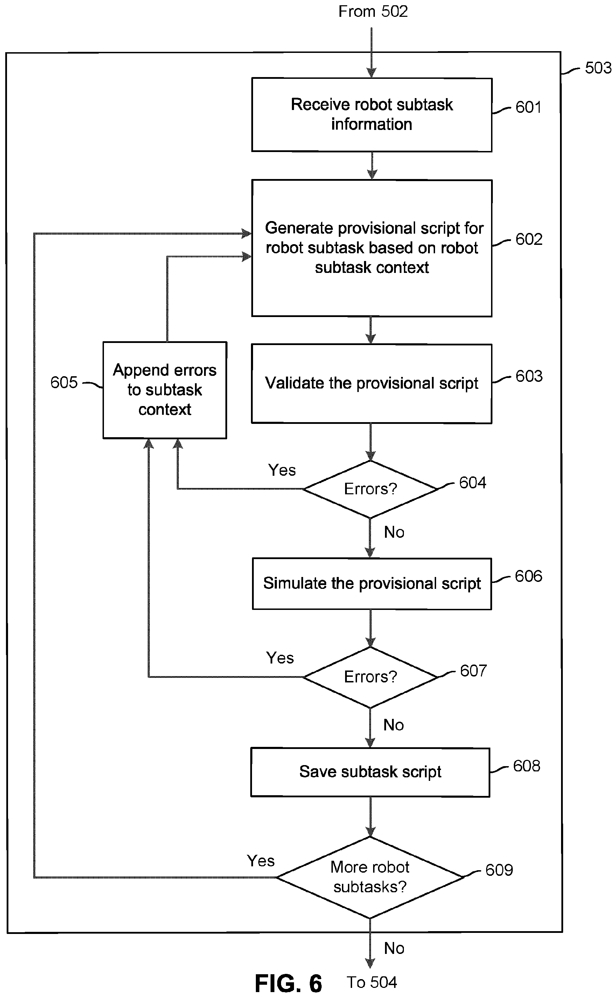

At step 503, script generation module 133 of robot control application processes the robot subtask information via language model 131 to generate a subtask script (e.g., subtask script 401) for each robot subtask. Step 503 is described in more detail in conjunction with FIG. 6.

At step 504, robot control application 126 executes each subtask script in sequence to control a robot (e.g., robot 150). In some embodiments, robot control application 126 can translate the subtask scripts into specific commands that prompt physical actions from the robot. The robot can be controlled to perform any suitable action(s) in some embodiments. For example, the robot could be controlled to grasp and manipulate an object, such as picking up the object, placing the object, and/or inserting the object into another object. As another example, the robot could be controlled to assemble objects together. In various embodiments, robot control application 126 uses one or more sensors (e.g., sensor(s) 140) to monitor robot movements for feedback to confirm the accuracy and/or otherwise correct each movement.

FIG. 6 is a flow diagram of method steps for generating subtask scripts, according to various embodiments. Although the method steps are described in conjunction with the systems of FIGs. 1-5, persons skilled in the art will understand that any system configured to perform the method steps in any order falls within the scope of the present embodiments.

As shown, at step 601, subtask context module 402 receives robot subtask information (e.g., robot subtask information 304). Subtask context module 402 also receives one or more scripting rules (e.g., scripting rule(s) 408) and one or more scripting examples (e.g., scripting example(s) 409). The scripting rule(s) include the syntax and semantic guidelines to ensure that the scripts generated by script generation module 133 are coherent and executable. For example, if the script is to be generated in Python, the scripting rule(s) can include standards such as using Python-specific code, including essential imports, or encapsulating the logic within a main function. Similarly, for C++ scripts, the scripting rule(s) can include guidelines for including header files, using proper namespace declarations, and adhering to object-oriented principles. The scripting example(s) are examples of executable scripts for subtasks that are similar to subtasks specified in the robot subtask information. For example, in some embodiments, the behavior label (e.g., "Pick up") assigned to a subtask specified in the robot subtask information can be used to look up, within a set of files or a database, examples associated with the same behavior label. In some embodiments, the scripting example(s) include scripts with varying degrees of complexity, thus enriching the diversity and applicability of the scripting example(s). Subtask context module 402 stores the robot subtask information alongside the scripting rule(s) and the scripting example(s) within the subtask information (e.g., subtask information 405).

At step 602, script generation module 133 uses language model 131 to generate a provisional script (e.g., provisional script 413) for a robot subtask based on a subtask context that includes the subtask information as well as a script history (e.g., script history and a simulation history (e.g., simulation history 407). Subtask context module 402 communicates the subtask context to text replacer module 401, which systematically replaces any proprietary and confidential terms with the public counterparts. The text replaced subtask context is then input into language model 131, which generates a script that may or may not include errors. Following the script generation, the preliminary script undergoes a further round of text replacement by text replacer module 401 to ensure all terms are non-proprietary, resulting in the provisional script, before being stored in a script history (e.g., script history 406).

At step 603, script validation module 403 validates provisional script against various parameters, such as correct syntax, proper formatting, and/or the absence of runtime exceptions. In some embodiments, script validation module 403 also checks to ensure that the provisional script is a script that includes program code.

At step 604, if there are validation errors, then method 500 proceeds to step 605, where script generation module 133 appends the errors to the subtask context. In some embodiments, the validation errors are stored in a script history (e.g., script history 406), and the simulation errors are stored in a simulation history (e.g., simulation history 407). Method 500 then returns to step 602, where script generation module 133 generates another provisional script for the robot subtask based on the robot subtask context.

If there are no validation errors, then method 500 continues directly to step 606, where simulation module 404 simulates the provisional script. Simulation module 404 conducts a virtual test run of using the provisional script to control a robot to evaluate the provisional script in directing the robot subtask.

At step 607, if there are simulation errors, then method 500 proceeds to step 605, where script generation module 133 appends the errors to the subtask context. On the other hand, if there are no simulation errors, then method continues directly to step 608, where script generation module 133 saves the subtask script.

At step 609, script generation module 133 checks whether there are more robot subtasks. If there are no more robot subtasks, then method 500 continues to step 504, where robot control application 126 executes the subtask scripts in sequence to control a robot, as described above in conjunction with FIG. 5. If there are more robot subtasks, then method 500 returns to step 602, where script generation module 133 uses language model 131 to generate a provisional script for another robot subtask based on the subtask context. Although shown as an iterative process in which subtask scripts are generated for one subtask after another, in some embodiments, script generation module 133 can be implemented using multiple agents that execute in parallel to generate scripts for different subtasks specified in the robot subtask information received at step 601, and then simulating and debugging the scripts in sequence to ensure that a task can be performed successfully.

In sum, techniques are disclosed for automatically programming robots to perform tasks. Given a natural language input specifying a robot task, a language model is used to design and generate executable scripts for controlling a robot to perform the task. In some embodiments, a robot control application prompts a language model to decompose the task specified in the natural language input into a series of simpler subtasks. Then, the robot control application prompts the language model to generate executable scripts for each of the subtasks. The robot control application validates the generated scripts to identify compile-time and run-time errors. The validation can include simulating execution of the scripts in sequence to control a robot within a virtual environment. When an error is identified during the validation, the robot control application prompts the language model to revise the scripts to eliminate the error. After executable scripts are generated and validated, the scripts can be executed in sequence to control a physical robot to perform the task.

At least one technical advantage of the disclosed techniques relative to the prior art is that, unlike conventional robotic systems that are unable to perform new tasks without extensive manual reprogramming, the disclosed techniques automatically generate executable scripts for controlling robots to perform new tasks. With the disclosed techniques, time-intensive manual reprogramming and expert knowledge are not required to adapt a robot to various scenarios that require the robot to perform different tasks. These technical advantages represent one or more technological improvements over prior art approaches.
1. In some embodiments, a computer-implemented method for generating program code to control a robot comprises receiving user input specifying a task to be performed by the robot, processing the user input via a first machine learning model to generate a plurality of subtasks for performing the task, and for each subtask included in the plurality of subtasks, processing the subtask via a second machine learning model to generate program code for controlling the robot to perform the subtask.
2. The computer-implemented method of clause 1, further comprising performing one or more operations to simulate the robot performing each subtask included in the plurality of subtasks based on the program code for controlling the robot to perform the subtask, and in response to one or more errors when simulating the robot to perform a first subtask included in the plurality of subtasks, processing the first subtask and the one or more errors via the second machine learning model to generate additional program code for controlling the robot to perform the first subtask.
3. The computer-implemented method of clauses 1 or 2, wherein the user input is a natural language input, and each of the first machine learning model and the second machine learning model is a language model.
4. The computer-implemented method of any of clauses 1-3, further comprising, for each subtask included in the plurality of subtasks, selecting one or more examples of program code associated with the subtask from a plurality of examples of program code, wherein processing the subtask via the second machine learning model comprises inputting the subtask and the one or more examples of program code associated with the subtask into the second machine learning model.
5. The computer-implemented method of any of clauses 1-4, wherein processing the user input via the first machine learning model comprises inputting, into the first machine learning model, at least one of a role of the first machine learning model to generate the plurality of subtasks, one or more rules for output of the first machine learning model, one or more parameters associated with the robot, or one or more parameters associated with the task.
6. The computer-implemented method of any of clauses 1-5, wherein processing the subtask via the second machine learning model comprises inputting, into the second machine learning model, at least one of a role of the second machine learning model to generate program code, one or more rules for output of the second machine learning model, one or more parameters associated with the robot, one or more parameters associated with the task, one or more definitions associated with a programming language associated with the program code, or one or more examples of program code.
7. The computer-implemented method of any of clauses 1-6, wherein processing the subtask via the second machine learning model further comprises inputting, into the second machine learning model, at least one of one or more previous outputs of the second machine learning model or one or more errors from one or more simulations of the robot performing the subtask.
8. The computer-implemented method of any of clauses 1-7, further comprising performing one or more operations to verify that the program code for controlling the robot to perform the subtask is program code.
9. The computer-implemented method of any of clauses 1-8, wherein the first machine learning model is the second machine learning model.
10. The computer-implemented method of any of clauses 1-9, further comprising causing the robot to move based on the program code for each subtask.
11. In some embodiments, one or more non-transitory computer-readable media store instructions that, when executed by at least one processor, cause the at least one processor to perform the steps of receiving user input specifying a task to be performed by the robot, processing the user input via a first machine learning model to generate a plurality of subtasks for performing the task, and for each subtask included in the plurality of subtasks, processing the subtask via a second machine learning model to generate program code for controlling the robot to perform the subtask.
12. The one or more non-transitory computer-readable media of clause 11, wherein the instructions, when executed by the at least one processor, further cause the at least one processor to perform the steps of performing one or more operations to simulate the robot performing each subtask included in the plurality of subtasks based on the program code for controlling the robot to perform the subtask, and in response to one or more errors when simulating the robot to perform a first subtask included in the plurality of subtasks, processing the first subtask and the one or more errors via the second machine learning model to generate additional program code for controlling the robot to perform the first subtask.
13. The one or more non-transitory computer-readable media of clauses 11 or 12, wherein the one or more errors include at least one of a run-time exception, a syntax error, a format error, a collision, or a failure to achieve a final state associated with the task.
14. The one or more non-transitory computer-readable media of any of clauses 11-13, wherein each of the first machine learning model and the second machine learning model comprises a large language model (LLM).
15. The one or more non-transitory computer-readable media of any of clauses 11-14, wherein the instructions, when executed by the at least one processor, further cause the at least one processor to perform the step of, for each subtask included in the plurality of subtasks, selecting one or more examples of program code associated with the subtask from a plurality of examples of program code, wherein processing the subtask via the second machine learning model comprises inputting the subtask and the one or more examples of program code associated with the subtask into the second machine learning model.
16. The one or more non-transitory computer-readable media of any of clauses 11-15, wherein processing the user input via the first machine learning model comprises inputting, into the first machine learning model, at least one of a role of the first machine learning model to generate the plurality of subtasks, one or more rules for output of the first machine learning model, one or more parameters associated with the robot, or one or more parameters associated with the task.
17. The one or more non-transitory computer-readable media of any of clauses 11-16, wherein processing the subtask via the second machine learning model comprises inputting, into the second machine learning model, at least one of a role of the second machine learning model to generate program code, one or more rules for output of the second machine learning model, one or more parameters associated with the robot, one or more parameters associated with the task, one or more definitions associated with a programming language associated with the program code, or one or more examples of program code.
18. The one or more non-transitory computer-readable media of any of clauses 11-17, wherein the instructions, when executed by the at least one processor, further cause the at least one processor to perform the step of selecting the one or more examples of program code based on a behavior label associated with the subtask.
19. The one or more non-transitory computer-readable media of any of clauses 11-18, wherein the instructions, when executed by the at least one processor, further cause the at least one processor to perform the step of causing the robot to move based on the program code for each subtask.
20. In some embodiments, a system comprises one or more memories storing instructions, and one or more processors that are coupled to the one or more memories and, when executing the instructions, are configured to receive user input specifying a task to be performed by the robot, process the user input via a first machine learning model to generate a plurality of subtasks for performing the task, and for each subtask included in the plurality of subtasks, process the subtask via a second machine learning model to generate program code for controlling the robot to perform the subtask.

Any and all combinations of any of the claim elements recited in any of the claims and/or any elements described in this application, in any fashion, fall within the contemplated scope of the present disclosure and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for generating program code to control a robot, the method comprising:
receiving user input specifying a task to be performed by the robot;
processing the user input via a first machine learning model to generate a plurality of subtasks for performing the task; and
for each subtask included in the plurality of subtasks, processing the subtask via a second machine learning model to generate program code for controlling the robot to perform the subtask.

2. The computer-implemented method of claim 1, further comprising:
performing one or more operations to simulate the robot performing each subtask included in the plurality of subtasks based on the program code for controlling the robot to perform the subtask; and
in response to one or more errors when simulating the robot to perform a first subtask included in the plurality of subtasks, processing the first subtask and the one or more errors via the second machine learning model to generate additional program code for controlling the robot to perform the first subtask.

3. The computer-implemented method of claim 1 or 2, wherein the user input is a natural language input, and each of the first machine learning model and the second machine learning model is a language model.

4. The computer-implemented method of any preceding claim, further comprising, for each subtask included in the plurality of subtasks, selecting one or more examples of program code associated with the subtask from a plurality of examples of program code, wherein processing the subtask via the second machine learning model comprises inputting the subtask and the one or more examples of program code associated with the subtask into the second machine learning model.

5. The computer-implemented method of any preceding claim, wherein processing the user input via the first machine learning model comprises inputting, into the first machine learning model, at least one of a role of the first machine learning model to generate the plurality of subtasks, one or more rules for output of the first machine learning model, one or more parameters associated with the robot, or one or more parameters associated with the task.

6. The computer-implemented method of any preceding claim, wherein processing the subtask via the second machine learning model comprises inputting, into the second machine learning model, at least one of a role of the second machine learning model to generate program code, one or more rules for output of the second machine learning model, one or more parameters associated with the robot, one or more parameters associated with the task, one or more definitions associated with a programming language associated with the program code, or one or more examples of program code.

7. The computer-implemented method of any preceding claim, wherein processing the subtask via the second machine learning model further comprises inputting, into the second machine learning model, at least one of one or more previous outputs of the second machine learning model or one or more errors from one or more simulations of the robot performing the subtask.

8. The computer-implemented method of any preceding claim, further comprising performing one or more operations to verify that the program code for controlling the robot to perform the subtask is program code.

9. The computer-implemented method of any preceding claim, wherein the first machine learning model is the second machine learning model.

10. The computer-implemented method of any preceding claim, further comprising causing the robot to move based on the program code for each subtask.

11. A computer program product comprising instructions that, when executed by at least one processor, cause the at least one processor to perform the method of any preceding claim.

12. A system, comprising:
one or more memories storing instructions; and
one or more processors that are coupled to the one or more memories and, when executing the instructions, are configured to perform the method of any of claims 1 to 10.
